Europäisches Patentamt

(19) European Patent Office

Office européen des brevets

(11) Publication number: **0 194 043**
**B1**

(12) # EUROPEAN PATENT SPECIFICATION

(45) Date of publication of the patent specification:
31.05.89

(51) Int. Cl.⁴: **C 12 G  3/08**

(21) Application number: **86300862.9**

(22) Date of filling: **07.02.86**

---

(54) **Method for production of a low alcoholic wine and agent for performance of the method.**

---

(30) Priority: **08.02.85  DK 583/85**

(43) Date of publication of application:
**10.09.86 Bulletin 86/37**

(45) Publication of the grant of the patent:
**31.05.89 Bulletin 89/22**

(84) Designated Contracting States:
**AT CH DE FR GB IT LI**

(56) References cited:
**DE-C-728 959**
**FR-A-1 284 553**

**CHEMICAL ABSTRACTS, vol. 68, no. 13, 25th March 1968, page 5652, no. 58545b, Columbus, Ohio, US; A.A. MERZHANIAN et al.: "Action of glucose oxidase in grape wines and must", & IZV. VYSSH. UCHEB. ZAVED. PISHCH. TEKHNOL. 1967(6), 89-92**

**The file contains technical information submitted after the application was filed and not included in this specification**

(73) Proprietor: **NOVO INDUSTRI A/S, Novo Allé, DK-2880 Bagsvaerd (DK)**

(72) Inventor: **Villettaz, Jean- Claude, Im Lee 10, CH-4144 Arlesheim (CH)**

(74) Representative: **Brown, John David, FORRESTER & BOEHMERT Widenmayerstrasse 4/I, D-8000 München 22 (DE)**

---

## Description

"Wine" with reduced alcohol concentration, typically 6 % v/v, i.e. around 50 % of the usual alcohol concentration, is a product, for which a demand has arisen in the last decade. For the sake of brevity in the following, this product will be identified as a low alcoholic wine or a light wine, even if wine by law in some countries, e.g. Switzerland, is defined as a fermented product from grape juice containing not less than 8 % alcohol. Also in the following all percentages given are on a volume/volume basis, unless otherwise indicated.

Several methods have been devised in order to produce a low alcoholic wine. Ideally the low alcoholic wine should possess all normal properties of the wine, including taste and bouquet, except for the alcohol concentration and properties related directly to the alcohol concentration, e.g. mouth-feel.

An obvious method used industrially for production of a low alcoholic wine comprises distillation of usual wine with normal alcoholic content until the remanence obtains the wanted low alcohol concentration. However, several volatile constituents, including low boiling aroma substances, will be removed from the finished low alcoholic wine. Also, the finished product will posses an unwanted "boiled" taste. Finally, the method is relatively expensive. Reference is made to PCT patent application No. WO-82/02723 from Confédération suisse/Wädenswil.

Another method for production of a low alcoholic wine comprises osmosis. Also in this case some aroma constituents are lost, i.e. the majority of the low molecular aroma constituents, and also, this method is expensive. Reference is made to the advertisement in Schweizerische Zeitschrift für Obst- und Weinbau, 121, 1985 from Fruidor S.A., 2025 Chez-le-Bart/Ne, from which it appears that this process is performed commercially, even in spite of the indicated disadvantages.

A third method for production of a low alcoholic wine comprises dilution with water of ordinary wine. This, however, is illegal in some countries, and also, the low alcoholic wine obtains an unpleasant "diluted" taste.

A fourth method for production of a low alcoholic wine is described in US patent no. 4 468 407. This prior art method comprises freezing of a standard wine; separation of the frozen (alcohol poor) fraction and the liquid (alcohol rich) fraction, thawing the frozen fraction, and combining the thawed liquid with a standard wine. This known method, however, is very energy consuming, and also, some of the aroma substances are lost in the alcohol rich fraction.

A fifth method comprises harvesting the grapes at a very early stage, when the sugar content of the grapes is still low, whereafter the "wine" is produced in the normal way. However, the aroma development and the typicicity of the grapes are not fully developed, and also, the acidity of the grapes is extremely high. Thus, the quality of the finished low alcoholic wine is inferior, and also, not to be recommended due to the essential change of the harvesting time.

A sixth method is particularly interesting, because the European Common Market has supported development thereof, vide Bulletin de l'O.I.V. (Office International de la Vigne et du Vin), 1984, 641 - 642, pages 693 - 694. This method comprises fermentation of grape juice with yeast in the conventional manner, until around 50 % of the sugar is fermented, whereafter the fermentation is stopped by cooling, whereupon the alcohol (and the aroma constituents) are removed by evaporation. Now the second part of the fermentation is initiated in the alcohol free liquid, and the process is finished as a usual wine fermentation. The finished low alcoholic wine, however, contains only around half of the normal aroma constituents, and also, the method is expensive due to the cooling and the evaporation.

A seventh method comprises removal of the yeast well before the end of the fermentation, by means of centrifugation or sterile filtration. This method, however, is not attractive as the residual sugar content generates a wine with an unwanted sweet taste.

As appears from the above, none of the prior art methods for production of low alcoholic wine are satisfactory. This also appears from Business opportunity report, C-018 R Fermentation Products & Processes: Developments, Business Communications Co., Inc., 9 Viaduct Road, P.O. Box 2070 C, Stamford, Connecticut 06906, U.S.A., reference being especially directed to the paragraph bridging pages 14 and 15.

Thus, the purpose of the invention is the provision of a method for production of low alcoholic wine, by means of which an ideal low alcoholic wine is produced, i.e. a low alcoholic wine which possesses all normal properties of wine, including taste and bouquet, except for the alcohol concentration and properties related directly to the alcohol concentration, e.g. mouth-feel, and an agent for performance of such method.

The invention in its first aspect comprises a method for production of a low alcoholic wine comprising the following steps: 1) unfermented grape juice is treated with a glucose oxidase preparation while oxygen is supplied to the grape juice, until at least a minor amount of the glucose is converted to gluconic acid, whereafter 2) the thus treated glucose deficient grape juice is fermented to produce the low alcoholic wine, whereby if wanted the gluconic acid is at least partially neutralized until satisfactory organoleptic properties are obtained.

It is to be understood that the notion of "low alcoholic" in the sense of the invention also comprises the reduction of the potential alcohol present as sugar in the grape juice. This sugar reduction, however, may not be sufficient to exert an impact upon the effective amount of alcohol produced during fermentation, when enough sugar is left in the treated juice to generate the maximum alcohol level, i.e. around 14 - 15 %, and in such cases the advantage of lowering the alcohol potential will be a less sweet and a better acid balanced wine.

Also, it has to be understood that the low alcoholic wine produced according to the invention is not suitable only for direct consumption, but also for blending with other wines in order to obtain a more balanced wine. The low alcoholic wine produced according to the invention may for instance be used in order to raise the acidity and/or adjust the pH of an acid deficient wine. In this case the wine obtained after blending will also have a lower alcohol level.

It is to be understood that any glucose oxidase can be used in the method according to the invention, provided that the glucose oxidase exhibits a reasonable activity and stability at the pH and temperature prevailing during step 1. Thus, both soluble and immobilized glucose oxidase preparations may be used, even if soluble glucose oxidase preparations are usually preferred. The same considerations are valid for catalase, if used. Also due to the fact that it is extremely easy for the worker skilled in the art to find out how much glucose oxidase of a given kind is needed for a given juice and a desired conversion, as will be shown later in this specification, no discussion of activity units is needed.

Also, it is to be understood that the method according to the invention can be used for any kind of low alcoholic wines, e.g. corresponding to white wine, red wine and sparkling wine.

In regard to step 1) it is to be noted that the conversion degree is very easily controlled, as the reaction is stopped almost immediately by cutting the oxygen supply.

It is intended that the invention also comprises the case where the glucose deficient grape juice resulting from step 1 is kept as an acid supply (acid reserve) and blended with an acid deficient wine, until satisfactory organoleptic properties are obtained, in this way also reducing the alcoholic content of the acid deficient wine.

In regard to the facultative aspect of partial removal of the gluconic acid it has to be noted that a total or partial removal of the gluconic acid has to be carried out in cases, when relatively big percentages of glucose are converted to gluconic acid, while in other embodiments comprising just a minor correction of the alcohol content the gluconic acid acidity generated by the method according to the invention is a wanted correction of the acidity, which should certainly not be neutralized Also, this removal if carried out can be performed in various ways, e.g. by means of ion exchange or by neutralization of the gluconic acid in order to form a sparingly soluble gluconate, which is subsequently removed by filtation.

It is to be understood that the removal of the gluconic acid can be performed during any step of the reaction, but is perferably performed after fermentation.

Thus, the method according to the invention can be used both for small corrections of the alcoholic content, e.g. from 12 % to 11 %, in order to generate a better balance between the properties of the wine, and for production of more typical light wines, e.g. wines with an alcoholic concentration of e.g. 6 - 7 %. If the entire amount of glucose is converted to gluconic acid, the resulting low alcoholic wine would exhibit an alcohol concentration which would be approximately 50 % of the alcohol concentration of the wine obtainable from the corresponding grape juice not treated with glucose oxidase, the glucose and fructose concentrations in natural grape juice at the full maturation being approximately equal.

Also, according to the invention it has been found that the gluconic acid in some cases do exhibit a stabilizing effect on the finished wine in regard to precipitation of salts of tartaric acid. Even if gluconic acid is not as efficient as a stabilizing agent as CMC which has been proposed (but not yet allowed) CMC is to be considered a foreign material in contra-distinction to gluconic acid, and also, gluconic acid in the method according to the invention is produced so to speak free of charge.

In a preferred embodiment of the method according to the invention the glucose oxidase preparation contains catalase. If no catalase is present, the hydrogen peroxide produced in step 1 has a tendency to produce a wine colour which is somewhat lighter than the conventional wine colour, if white wines or sparkling white wines are produced. Also, in case of white wines or sparkling white wines the colour of the wine produced with catalase containing glucose oxidase exhibits a somewhat deeper yellow colour than the colour of usual wine (probably due to the oxygen treatment during step 1), and thus, according to the invention an opportunity is offered for generation of any wanted colour between these two extremes by corresponding mixing.

In a preferred embodiment of the method according to the invention, the glucose oxidase preparation used has a relatively high activity and stability in the pH range between around 3 and 4. A major deviation of the pH of the grape juice in step 1 outside the interval for the natural pH-value of the grape juice is not recommendable, as this would have a tendency to degrade the quality of the finished product. Thus, among the different glucose oxidase products available (produced on the basis of different microorganisms) it is advantageous to choose a glucose oxidase with the best possible activity and stability in this pH interval. It has to be realized, however, that most - if not all - available glucose oxidases have a pH activity optimum on the alkaline side of the pH interval 3 - 4. However, at least the glucose oxidase with which the applicant has made experiments so far, exhibit a reasonably high activity and stability in the pH interval 3 - 4, vide e.g. example 9.

In a preferred embodiment of the method according to the invention oxygen in step 1 is supplied continuously to the grape juice. As will be explained later in more detail the supply of oxygen has a remarkably great influence on the reaction rate of the enzymatic reaction in step 1. Thus, this embodiment ensures a high reaction rate.

In a preferred embodiment of the method according to the invention, oxygen is supplied by means of an air pump. Also, as will be explained later in more detail, it has been found that an air pump seems to be the most efficient means of introduction of oxygen into the grape juice.

In a preferred embodiment of the method according to the invention, the amount of glucose oxidase preparation added in step 1 is sufficient for generation of the wanted reduction of glucose concentration in a period of time not exceeding around 48 hours. Even if a certain amount of yeast is present in the grape juice it has been found that the fermentation will not initiate to any appreciable degree during the first 48 hours, and thus, it is possible to convert the total amount of glucose to gluconic acid, no appreciable amount of glucose simultaneously being fermented to alcohol.

In a preferred embodiment of the method according to the invention the pH value in step 1 is not controlled. This embodiment is preferred in cases, where a longer treatment time corresponding to step 1, e.g. up to around 48 hours, can be accepted. Reference is made to the following examples 2, 3 and 5.

In a preferred embodiment of the method according to the invention the temperature during step 1 is between 5 and 25°C, preferably between 15 and 20°C. Ordinarily, in enzymatic reactions, the overall reaction rate will increase with temperature, if the temperature is raised from around 25 to 40°C. In this case, however, oxygen will be liberated from the liquid, if the temperature is raised from 25 to 40°C, and thus, the overall reaction rate will be reduced under such circumstances. Also, a longer treatment at 40°C would be detrimental to the quality of the grape juice.

In a preferred embodiment of the method according to the invention the gluconic acid is removed by means of neutralization by addition of a substance forming a sparingly soluble salt of gluconic acid, preferably calcium carbonate. Calcium carbonate is cheap and is already used as a chemical deacidification agent for wines, and precipitated gluconic acid salts, mainly calcium gluconate, can easily be removed by filtration. As the wine has to be filtered anyway, this neutralization does not introduce any extra filtration step into the process.

In a preferred embodiment of the method according to the invention the low alcoholic wine is a sparkling wine. Especially with sparkling wines the acidity is considered to be a quality factor, vide Sekt, Schaum- und Perlwein, R. Gerhard Troost et al., Verlag Engen Ulmer, Stuttgart, 1980, page 19, line 1 - 7. Thus, the method according to the invention is specially well suited in relation to the production of sparkling wines due to the gluconic acid generation.

The invention in its second aspect comprises an agent for production of the low alcoholic wine according to the invention, wherein the active component of the agent is a glucose oxidase preparation.

In a preferred embodiment of the agent according to the invention the glucose oxidase preparation is a solid soluble preparation, preferably a non dusting preparation. The storage stability of a solid preparation is better than the storage stability of a liquid preparation, and also, it is unnecessary to add any conservation agents. It is recommended, though, that the user immediately before use dissolves the agent in a small amount of water and adds this solution to the unfermented grape juice.

Due to the fact that the aroma, the taste and the bouquet of the wine are properties which are extremely susceptible, it could not be predicted, whether or not the low alcoholic wine produced according to the invention would possess the wanted properties, inasmuch as the low alcoholic wine produced according to the invention in case of soluble glucose oxidase preparations will contain traces of (inactive) glucose oxidase and differ from ordinary wine in regard to the concentration of other constituents, too. However, except for cases, where very high amounts of gluconic acid have to be removed, surprisingly according to the invention it has been found that the low alcoholic wine produced according to the invention possesses all normal properties of wine, including taste and bouquet, except for the alcohol concentration and properties related directly to the alcohol concentration, e.g. mouth-feel. As a side-effect the low alcoholic wine produced according to the invention can be better balanced in regard to acidity and alcohol and sugar content, if any, as according to the invention the alcohol level is reduced and the acidity is raised, whereby the acidity can be controlled by more or less complete removal of the gluconic acid. This has for instance a special significance for wine produced in countries with a hot climate, as the grapes in such countries contain a relatively high sugar content and exhibit a relatively low acidity, whereby the wine producers are compelled to adjust the acidity by addition of tartaric acid. This disadvantage may be eliminated according to the invention.

Also, all grape juices contain polyphenols. During oxidation polyphenols polymerize and generate dark brown pigments. This phenomenon is reversible as long as a certain degree of polymerization has not been reached. In relation to the method according to the invention the grape juices show a brown colour at the end of the oxidation step. Surprisingly, however, these brown pigments disappear almost completely during the alcohol fermentation (reductive step). The resulting wines have a golden yellow colour while the non-treated ones have a yellowish colour. Therefore from this point of view, the oxygen exposure has no detrimental effect on the colour of the wine.

Reference is made to CH-632 137 which describes a decomposition ("Abbau") of sugar in a fruit juice by means of enzymes. However, the invention does not comprise any decomposition of glucose, as gluconic acid has a higher molecular weight than glucose, which correlates very well to the fact that glucose oxidase is not mentioned at all as an enzyme in the CH patent; only enzymes from yeast are mentioned. Also, a fruit juice is produced by means of the known method, whereas the intermediate product produced according to the invention (the product at the end of stage 1)) is not fruit juice, vide e.g. Richtwerte und Schwankungsbreiten bestimmter Kennzahlen (RSK-Werte) für Apfelsaft, Traubensaft und Orangensaft, Sonderheft Flüssiges Obst. 3a/1982, page 188 - 199.

Also reference is made to UK-patent no. 1 373 562, which describes removal of glucose from drinks by means of an immobilized glucose oxidase, whereby the glucose is oxidized to gluconic acid. However, the grape juice used as a starting material in the process according to the invention contains several different microorganisms in great amounts, and thus, if an immobilized preparation would be used just a few times as the enzyme in the method according to the invention, microbiological problems would arise due to microbial growth on the immobilized preparation and subsequently undesired fermentaton of the grape juice. Thus, the immobilized preparation would have to be discarded after a short while, and the use of an immobilized preparation would be too expensive, unless a very cheap immobilized glucose oxidase product is used. Even if the UK patent describes a step similar to step 1 according to the invention, it does not describe or make obvious the combination of step 1 and step 2 according to the invention.

Also, reference is made to the fact that glucose oxidase has been used in the enological field in order to remove traces of oxygen from wines prior to bottling. In contradistinction thereto, however, the method according to the invention requires the constant presence of oxygen, and is only concerned with low alcoholic wines.

The influence of the oxygen supply on the reaction rate of the reaction in step 1 was demonstrated by some model experiments carried out with the glucose oxidase preparation HYDERASE from Amano and with a glucose oxidase activity of 15.000 units/g, as defined in the leaflet HYDERASE (Glucose oxidase for food industry) from AMANO PHARMACEUTICAL CO. LTD., No. 2 - 7, I-Chome, Nishiki, Naka-ku, Nagoya, Japan. In all model experiments, a glucose oxidase activity corresponding to 0.5 g/l of aqueous model solution was used, the aqueous model solutions consisting of the following constituents besides water:

Glucose: 100 g/liter
Tartaric acid buffer, 0.05 M, pH 3.6.

The model experiments were carried out with volumes of 200 ml of the model liquids, without agitation, with a magnetic stirrer, with a propeller, and with an air pump. The efficiency of the different experimental conditions for introduction of air appears from the following table.

Time in days after enzyme addition

| % of remaining glucose | without agitation | agitation with magnetic stirrer | agitation with propeller | introduction of air with air pump |
|---|---|---|---|---|
| 85 | 2 | - | - | - |
| 0 | not obtainable | 4 | 2 | 1 |

In order to illustrate the invention, reference is made to the following examples:

### Example 1 - 6

The juice used in these examples is a commercial 15.5° Brix white grape juice (blend of different white grapes) containing around 48 % glucose and 52 % fructose. The pH of the juice is 3.4. In this and in the other examples, the enzymatic treatment is carried out at 20°C. In some of the examples one liter of the juice is saturated with oxygen during 1 h at 20°C by pumping air as small air bubbles into the juice with a conventional air pump, vide the following table. The saturated juice is treated with 0, 1, 10 or 50 mg of HYDERASE glucose oxidase at 20°C without further oxygen supply or agitation, vide the following table. 48 or 12 hours after enzyme addition, the grape juice is inoculated with a selected active dry wine yeast preparation (Saccharomyces cerevisiae) called UVAFERM CM, vide the following table. The alcoholic fermentation takes place at 20°C in an Erlenmeyer flask closed with a fermentation bung. Once the alcoholic fermentation is over, alcohol level, total acidity and pH as well as the organoleptic characteristics of the wine are determined. Example no. 6 is a blank (corresponding to normal wine) without enzyme and with a total acidity of 8.9 g of tartaric acid/liter, vide the below indicated table. The wine in the other examples were neutralized with $CaCO_3$ until a total acidity of 8.9 as above, whereby a precipitate comprising calcium gluconate was formed. This precipitate was separated by filtration of the wine and discarded.

The experimental conditions and the results obtained appear from the following table.

| Example No. | Enzyme dosage, g/hl | Introduction of air with air pump during enzyme treatment | Period of time between addition of enzyme and addition of yeast, h | pH during oxidation kept constant yes | pH during oxidation kept constant no | Final pH after oxidation (before fermentation) | Alcohol percentage | Total acidity, calculated as g of tartaric acid/litre |
|---|---|---|---|---|---|---|---|---|
| 1 | 1 | no | 48 | | x | 3.38 | 9.2 | 9.8 |
| 2 | 1 | yes | 48 | | x | 3.19 | 9.1 | 12.4 |
| 3 | 10 | yes | 48 | | x | 2.95 | 7.0 | 23.0 |
| 4 | 10 | yes | 48 | x | | 3.4 | 6.7 | 19.3 |
| 5 | 50 | yes | 12 | | x | 2.81 | 5.9 | 27.0 |

| 6 | 0 | no | - | x | 3.42 | 9.2 | 8.9 |

It appears from the table (examples 1 and 6 outside scope of invention) that no light wine is produced if no air is introduced or if no glucose oxidase is added. Also, it appears from the table that an enzyme dosage of 1 g/hl is too small for production of a light wine under the specific circumstances indicated. Furthermore, it was found that the organoleptic properties of the wine corresponding to example 5 was unacceptable due to an off-taste generated by the high enzyme dosage and due to the high amount of added deacidification agent. However, by purification of the enzyme preparation and by use of another, more appropriate gluconic acid removal technique it is possible to produce a light wine with acceptable organoleptic properties even with this high enzyme dosage. The light wine corresponding to examples 3 and 4 was organoleptically acceptable.

**Example 7**

In this example a grape juice containing 64° Oe (around 15.2° Brix or 7.5 % glucose) was treated with various amounts of HYDERASE glucose oxidase. Oxygen was introduced in such a manner that maximum saturation was achieved. The amount of gluconic acid produced or of residual glucose was determined by HPLC. The following table indicates the conversion rate versus time related to each enzyme dosage:

| Enzyme dosage g/hl | Conversion rate obtained expressed as % glucose oxidized after | | |
|---|---|---|---|
| | 12 h | 16 h | 48 h |
| 1 | 4.8 | n.d. | 17 |
| 2 | n.d. | 16.4 | 17.3 |
| 5 | n.d. | 33.9 | 36.2 |
| 10 | n.d. | 46.3 | 56 |
| 20 | n.d. | 48.7 | 55 |
| 50 | n.d. | 73.7 | 97.5 |
| 100 | n.d. | 90.7 | 100 |

n.d. = not determined

The above figures indicate that it is possible to oxidize the entire glucose fraction by means of treatment with glucose oxidase. The thus treated juices were then fermented by adding 10 g/hl UVAFERM CM yeast. No problem occurred during fermentation, which lasted for about one week. The final alcohol level was in accordance with the amount of the residual sugar present (mainly fructose) in the juice after the enzyme treatment. This proves that gluconic acid is not metabolized to alcohol by wine yeast.

**Example 8**

This example illustrates the influence of the oxygen level on the efficiency of the enzymatic reaction. The oxygen level was followed during the reaction by means of a specific oxygen electrode. It has been established that oxygen is a key parameter for the enzyme treatment. An air pump was used for all experiments. A continuous oxygen supply is necessary to keep the glucose oxidase working. The following table indicates the concentration of oxygen registered during the enzymatic reaction. The grape juice was 64° Oe, and the glucose oxidase was added in an amount corresponding to 50 g/hl of HYDERASE glucose oxidase.

| Condition of juice | $O_2$ concentration (mg/l) |
|---|---|
| grape juice unstirred | 2.7 |
| aerated grape juice before enzyme addition | 5.7 |
| aerated grape juice immediately after enzyme addition | 0.8 |
| 1 h after enzyme addition | 0.8 (pH 3.4) |
| 2 " " " " | 0.8 |
| 3 " " " " | 1.0 |
| 4 " " " " | 1.2 |
| 5 " " " " | 1.3 |
| 6 " " " " | 1.5 |
| 8 " " " " | 2.1 |
| 10' " " " | 3.3 |
| 12' " " " | 4.0 |
| 20' " " " | 4.7 |

| 24″ ″ ″ ″ | 4.8 (pH 2.67, 91 % of glucose oxidized) |
| 48′ ″ ″ ″ | 5.0 (pH 2.66, 96 % of glucose oxidized) |

**Example 9**

This example illustrates the utility of four different glucose oxidase products on the market to-day, i.e. Deoxin glucose oxidase from Nagase, Hyderase glucose oxidase from Amano Pharmaceuticals, Glucox-RF glucose oxidase from Sturge enzymes, and Merck GO No. 8443 from Merck and also the fact that the invention can be performed both with and without catalase. Reference is made to the corresponding brochures, viz. Deoxin glucose oxidase, "Nagase" Enzymes, Nagase & Co. Ltd., Konishi Bldg. 2, 2-chome Honcho, Nihonbashi Chuo-ku, Tokyo, Hyderase, Amano Pharmaceutical Co., Ltd. NO 2-7, 1-chome, Nishiki, Naka-ku, Nagoya, Japan, Glucox-RF, Sturge Enzymes, Denison Road, Selby, North Yorkshire, YO8 8EF, England, and the Merck catalogue, Merck, Darmstadt, Germany.

Also in this example a grape juice containing 64°C Oe (around 15.2° Brix or 7.5 % glucose) was used as a starting material. This grape juice was treated with different concentrations of the above indicated glucose oxidase preparations, as appears from the below tables. Oxygen was introduced in such a manner that maximum saturation was achieved.

| | Dosage | pH After treatment for 24 hours | pH After treatment for 48 hours |
|---|---|---|---|
| Sturge Glucox | 500 g/hl | 2.95 | 2.95 |
| Nagase Deoxin | 50 g/hl | 2.93 | 2.90 |
| Amano Hyderase | 50 g/hl | 2.69 | 2.65 |
| Merck GO 8443 | 8.5 g/hl | 3.07 | 3.05 |
| without enzyme | - | 3.4 | 3.4 |

| | | residual glucose, % | |
|---|---|---|---|
| | Dosage | after treatment for 24 hours | after treatment for 48 hours |
| Sturge Glucox | 500 ml/hl | 70.6 | 68.1 |
| Nagase Deoxin | 50 g/hl | 61.5 | 59.2 |
| Amano Hyderase | 50 g/hl | 16.7 | 9.8 |
| Merck GO No. 8443 | 8.5 g/hl | 81.6 | 81.1 |
| without enzyme | - | 100 | 100 |

After treatment for 48 hours the grape juice samples were inoculated with 10 g/hl of dry yeast Uvaferm CM.
The alcohol fermentation was carried out at room temperature, and lasted about one week. The following alcohol levels were measured at the end of the alcoholic fermentation.

| Sturge Glucox | 8.7 Vol.-% |
|---|---|
| Nagase Deoxin | fermentation delayed |
| Amano Hyderase | 5.2 Vol.-% |
| Merck GO No. 8443 | fermentation delayed |
| without enzyme | 9.4 Vol.-% |

The fermentation problems observed in connection with the use of Deoxin and Merck GO No. 8443 are probably due to the presence of hydrogen peroxide in the grape juice, as these two enzymes did not contain catalase. In such cases, it is recommended to postpone the inoculation of the grape juice with wine yeast, until hydrogen peroxide has been fully decomposed.

**Example 10**

This Example illustrates production of wine with only minor corrections of the alcohol content. A chasselas grape juice of 83 degrees OE (19 - 20 degrees Brix) was treated with 50 g of HYDERASE glucose oxidase at room temperature and with air saturation, whereafter the treatment was interrupted by disconnection of the air supply at different times (vide the column contact time in the below Table), whereafter the treated grape juice was fermented for a week with UVAFERM CM yeast.

7

| Contact Time | pH | Residual Glucose, per cent | Alcohol (Volume per cent) |
|---|---|---|---|
| 0 H | 3.65 | 100 | 12.4 |
| 2 H | 3.28 | 90.5 | 11.1 |
| 6 H | 3.06 | 74.4 | 10.3 |
| 12 H | 2.94 | 63.7 | 9.5 |

In relation to the wine corresponding to the 2 H treatment no removal of the gluconic acid was necessary. In relation to the wines corresponding to the 6 H and 12 H treatment removal or partial removal of the gluconic acid is generally recommended for organoleptic reasons.

The features disclosed in the foregoing description and in the following claims may, both separately and in any combination thereof, be material for realising the invention in diverse forms thereof.

**Claims**

1. Method for production of a low alcoholic wine, wherein 1) unfermented grape juice is treated with a glucose oxidase preparation while oxygen is supplied to the grape juice, until at least a minor amount of the glucose is converted to gluconic acid, whereafter 2) the thus treated, glucose deficient grape juice is fermented to produce the low alcoholic wine, whereby if wanted the gluconic acid is at least partially removed until satisfactory organoleptic properties are obtained.

2. Method according to Claim 1, wherein the glucose oxidase preparation contains catalase.

3. Method according to Claim 1 or 2, wherein the glucose oxidase preparation used has a relatively high activity and stability in the pH range between around 3 and 4.

4. Method according to Claim 1 - 3, wherein oxygen in step 1) is supplied continuously to the grape juice.

5. Method according to Claim 4, wherein oxygen is supplied by means of an air pump.

6. Method according to Claims 1 - 5, wherein the amount of glucose oxidase preparation added in step 1) is sufficient for generation of the wanted reduction of glucose concentration in a period of time not exceeding around 48 hours.

7. Method according to Claims 1 - 6, wherein the pH value in step 1) is not controlled.

8. Method according to Claims 1 - 7, wherein the temperature during step 1) is between 5 and 25°C, preferably between 15 and 20°C.

9. Method according to Claims 1 - 8, wherein the gluconic acid is removed by means of neutralization by addition of a substance forming a sparingly soluble salt of gluconic acid, preferably calcium carbonate.

10. Method according to Claims 1 - 9, wherein the low alcoholic wine is a sparkling wine.

**Patentansprüche**

1. Verfahren zur Herstellung eines alkoholarmen Weines, wobei 1) unfermentierter Traubensaft unter Zufuhr von Sauerstoff zu dem Traubensaft mit einer Glucoseoxidase-Präparation behandelt wird, bis wenigstens eine geringere Menge der Glucose in Gluconsäureumgewandelt wird, woraufhin 2) der so behandelte, glucosearme Traubensaft unter Erzeugung des alkoholarmen Weins fermentiert wird, wobei - wenn erwünscht - die Gluconsäure wenigstens teilweise entfernt wird, bis geeignete organoleptische Eigenschaften erzielt sind.

2. Verfahren nach Anspruch 1, wobei die Glucoseoxidase-Präparation Katalase beinhaltet.

3. Verfahren nach Anspruch 1 und Anspruch 2, wobei die verwendete Glucoseoxidase-Präparation eine relativ hohe Aktivität und Stabilität in dem pH-Bereich zwischen etwa 3 und 4 aufweist.

4. Verfahren nach Anspruch 1 bis 3, wobei bei Schritt 1 Sauerstoff kontinuierlich dem Traubensaft zugeführt wird.

5. Verfahren nach Anspruch 4, wobei Sauerstoff mittels einer Luftpumpe zugeführt wird.

6. Verfahren nach Anspruch 1 bis 5, wobei die Menge der in dem Schritt 1 zugeführten Glucoseoxidase-Präparation ausreichend ist zur Erzeugung der gewünschten Reduktion der Glucosekonzentration in einem Zeitraum, der etwa 48 Stunden nicht übersteigt.

7. Verfahren nach Anspruch 1 bis 6, wobei der pH-Wert in Schritt 1) nicht gesteuert wird.

8. Verfahren nach Anspruch 1 bis 7, wobei die Temperatur während des Schritts 1) zwischen 5 und 25° C (vorzugsweise zwischen 15 und 20°C) beträgt.

9. Verfahren nach Anspruch 1 bis 8, wobei die Weinsäure mittels Neutralisation durch Addition einer Substanz entfernt wird, die ein mäßig lösliches Salz der Weinsäure, vorzugsweise Kalziumkarbonat, bildet.

10. Verfahren nach den Ansprüchen 1 bis 9, wobei der alkoholarme Wein ein Schaumwein ist.

**EP 0 194 043 B1**

## Revendications

1. Procédé de production d'un vin à faible teneur en alcool, dans lequel 1) on traite du jos de raisin non fermenté avec une préparation d'oxydase de glucose tandis que de l'oxygène est alimenté dans le jus de raisin jusqu'à ce qu'au moins une petite partie du glucose soit convertie en l'acide gluconique, après quoi 2) le jus de raisin déficient en glucose ainsi traité est mis en fermentation pour produire le vin à faible teneur en alcool, moyennant quoi si on le souhaite on enlève au moins partiellement l'acide gluconique jusqu'à l'obtention de propriétés organoleptiques satisfaisantes.

2. Procédé selon la revendication 1, dans lequel la préparation d'oxydase de glucose contient de la catalase.

3. Procédé selon la revendication 1 ou 2, dans lequel la préparation d'oxydase de glucose utilisée présente une stabilité et une activité relativement élevée dans la plage du pH se situant aux alentours de 3 et 4.

4. Procédé selon les revendications 1 à 3, dans lequel on alimente de façon continue dans le jus de raisin l'oxygène de l'étape 1).

5. Procédé selon le revendication 4, dans lequel l'oxygène est alimente au moyen d'une pompe pneumatique.

6. Procédé selon les revendications 1 à 5, dans lequel le quantité de préparation d'oxydase de glucose ajoutée à l'étape 1) est suffisante pour produire la réduction souhaitée de le concentration de glucose dans une période de temps ne dépassent pas environ 48 heures.

7. Procédé selon les revendications 1 à 6, dans lequel le valeur du pH de l'étape 1) n'est pas régulée.

8. Procédé selon les revendications 1 à 7, dans lequel la température au cours de l'étape 1) se situe entre 5 et 25°C, de préférence entre 15 et 20°C.

9. Procédé selon les revendications 1 à 8, dans lequel on enlève l'acide gluconique au moyen de la neutralisation en ajoutant une substance formant un sel difficilement soluble d'acide gluconique, de préférence du carbonate de calcium.

10. Procédé selon les revendications 1 à 9, dans lequel le vin à faible teneur en alcool est un vin pétillant.